# EUROPÄISCHE PATENTANMELDUNG

(11) **EP 3 405 003 A1**
(43) Veröffentlichungstag der Anmeldung: **21.11.2018**
(21) Anmeldenummer: 18157516.8
(22) Anmeldetag: 20.02.2018
(51) Int. Cl.: H05B 3/58, F16L 11/08, F16L 11/127

(54) **ELEKTRISCH LEITFÄHIGER SCHLAUCH**

(30) Priorität: 18.05.2017 DE 102017208414
(71) Anmelder: ContiTech Schlauch GmbH, 30165 Hannover (DE)
(72) Erfinder: Brühne, Klaus, 34497 Korbach (DE); Schmelter, Klaus, 59929 Brilon (DE); Tasseki, Metin, 34497 Korbach (DE); Witt, Erika, 34477 Berndorf (DE)
(74) Vertreter: Preusser, Andrea

(57) **Zusammenfassung**

Die Erfindung betrifft einen elektrisch leitfähigen Schlauch, welcher flexibel und mehrschichtig ist und wenigstens eine eingebettete Festigkeitsträgerlage enthält. Wenigstens ein eingebetteter Festigkeitsträger enthält hierbei wenigstens ein Garn aus einem Faserstoff, welches aus wenigstens zwei Fasern besteht, die verschiedenartig voneinander sind und wobei eine erste Faser elektrisch nicht-leitfähig ist und eine zweite Faser elektrisch leitfähig ist.

## Beschreibung

Die Erfindung betrifft elektrisch leitfähigen Schlauch, welcher flexibel und mehrschichtig ist und wenigstens eine eingebettete Festigkeitsträgerlage enthält.

Elektrisch leitfähige Schläuche können zum einen durch eine elektrisch leitend eingestellte elastomere Mischung elektrisch leitend ausgeführt werden, siehe u.a. EP2103856B1. Zum anderen kann durch metallisch leitfähige Litzen, beschichtete Fasern oder einer Kombination aus verzwirnten metallischen Litzen und textilen Garnen eine elektrische Leitfähigkeit des Schlauches hergestellt werden.
Weiterhin ist es möglich, siehe bspw. EP0882924B1, Carbonfasern in den Schlauchverbund einzubringen, um eine elektrische Leitfähigkeit sicher zu stellen. Carbonfasern haben allerdings den Nachteil eines fehlenden Dehnungsvermögens, einer schwierigen Verarbeitung durch die unzureichende Querstabilität und keine Festigkeit bei Stauchung. Darüber hinaus ist Carbon nur eingeschränkt zu verzwirnen.
Metallisch leitfähige Litzen, wie sie bspw. in WO2015/090661A1 beschrieben sind, haben den Nachteil der Korrosionsgefahr und der geringen elastischen Dehnung. Es besteht zudem die Gefahr eines Bruches und einer nicht definierbaren Widerstandsänderung durch die Dehnung der Litze.
Bei beschichteten Fasern ist nachteilig, dass die Beschichtung nur Oberflächlich vorhanden ist und im Verarbeitungsprozess oder bei der späteren Verwendung beschädigt werden kann, was zu einer hohen Streuung des elektr. Widerstandes führt. Gleichzeitig sind niedrige Widerstände mit dem Einbringen von beschichteten Fasern nicht realisierbar.

Die Aufgabe der vorliegenden Erfindung ist es somit, einen flexiblen, mehrschichtigen und elektrisch leitfähigen Schlauch bereitzustellen, der wenigstens einen eingebetteten Festigkeitsträger enthält und der sich durch eine verbesserte einstellbare Kraft-Dehnungskurve, eine verbesserte dynamische Festigkeit, eine bessere Knick- und Stauchbeständigkeit und einen elektrischen Widerstand mit geringerer Streuung auszeichnet.

Gelöst wird diese Aufgabe dadurch, dass wenigstens ein eingebetteter Festigkeitsträger wenigstens ein Garn aus einem Faserstoff enthält, welches aus wenigstens zwei Fasern besteht, die verschiedenartig voneinander sind und wobei eine erste Faser elektrisch nicht-leitfähig ist und eine zweite Faser elektrisch leitfähig ist.
Ein derartiges Garn wird im Folgenden auch als elektrisch leitfähiges Mischfasergarn bezeichnet.

Vorzugsweise ist wenigstens ein eingebetteter Festigkeitsträger des Schlauches vollständig aus wenigstens einem elektrisch leitfähigen Mischfasergarn, welches aus wenigstens zwei Fasern besteht, die verschiedenartig voneinander sind und wobei eine Faser elektrisch leitfähig ist, aufgebaut.
Aus dem elektrisch leitfähigen Mischfasergarn kann in einer weiteren bevorzugten Ausführungsform ein Zwirn hergestellt werden, so dass die Festigkeitsträgerlage entweder aus elektrisch leitfähigen Mischfasergarnen und / oder aus Zwirnen bestehend aus elektrisch leitfähigen Mischfasergarnen aufgebaut ist. Die elektrisch leitfähigen Mischfasergarne zur Herstellung des Zwirns können hierbei gleich oder verschieden voneinander sein.

Gemäß DIN 60900_01:1988 handelt es sich bei einem Zwirn um ein linienförmiges textiles Gebilde, welches durch Zusammendrehen (Zwirnen) von mindestens zwei Garnen hergestellt wurde. Es gibt einstufige und zweistufige Zwirne und zweifache und mehrfache Zwirne.
Ebenso gemäß DIN 60900_01:1988 ist ein Garn ein linienförmiges Gebilde, welches aus textilen Faserstoffen, z. Bsp. Spinnfasern, welche auch als Stapelfasern bezeichnet werden, Filamente oder Bändchen, etc. hergestellt ist. Als Monofil wird ein Garn aus einem Filament (Endlosfaser) mit einem Durchmesser bis etwa 0,1mm bezeichnet, während als Filamentgarn ein Garn aus einem Filament (= Mono-filamentgarn) oder mehreren Filamenten (= Multifilamentgarn, oft auch als Multifil bezeichnet) jeweils mit oder ohne Drehung bezeichnet wird, wobei die einzelnen Filamente einen Durchmesser bis etwa 0,1mm haben können. Die Begriffe Monofil und Monofilamentgarn können daher für einfädige, praktisch endlose Fasern synonym verwendet werden. Spinnfasern bzw. Stapelfasern haben hierbei eine limitierte Länge, während Filamentfasern endlos sind, siehe auch ISO 8159:1987.

Die eingebettete Festigkeitsträgerlage kann hierbei als Filz, Vlies, Gewebe, Geflecht, Gewirk, Gestrick, spiralisierte Cordlage oder Gelege ausgebildet sein. Es ist auch möglich, dass die eingebettete Festigkeitsträgerlage aus verschiedenen Komponenten aus Filz, Vlies, Gewebe, Geflecht, Gewirk, Gestrick, spiralisierter Cordlage oder Gelege ausgebildet ist. Es handelt sich bevorzugt um ein Geflecht, Kordware (engl. braided fabric) oder Webware (engl. woven fabric), bei der die Fläche durch Verkreuzen von zwei Fadensystemen, nämlich Kette und Schuß, oder parallele Einzelfäden, die kreuzweise übereinander liegen, hergestellt wird, oder um eine Maschenware (engl. Knitted fabric), bei denen eine mittels Faden gebildete Schleife in eine andere Schleife hineingeschlungen ist und wobei die auf diese Weise entstehenden Maschen unter Verwendung eines oder mehrerer Fäden gebildet werden können.
Handelt es sich bei der eingebettete Festigkeitsträgerlage bevorzugt um eine Webware, insbesondere um ein Gewebe, so können Kette und / oder Schuß, bevorzugt Kette und Schuß, aus dem elektrisch leitfähigen Mischfasergarn und / oder aus dem daraus hergestellten Zwirn bestehen.
In einer weiteren Ausführungsform handelt es sich bei der eingebetteten Festigkeitsträgerlage um eine Maschenware, insbesondere ein Gestrick, Geflecht oder eine spiralisierte Cordlage, bei dem entweder wenigstens ein Faden der Festigkeitsträgerlage, bevorzugt die gesamte Festigkeitsträgerlage, aus dem elektrisch leitfähigen Mischfasergarn und / oder aus dem daraus hergestellten Zwirn besteht. Bevorzugt werden für das elektrisch leitfähige Mischfasergarn für die erste nicht-leitfähige Faser und / oder für die zweite leitfähige Faser Stapelfasern verwendet.

Somit kann entweder nur die erste nicht-leitfähige Faser aus Stapelfasern oder nur die zweite leitfähige Faser aus Stapelfasern bestehen.
In einer besonders bevorzugten Ausfuhrungsform bestehen allerdings die Fasern für die erste nicht-leitfähige Faser und für die zweite leitfähige Faser beide aus Stapelfasern. Durch die gute mechanische Haftung der Stapelfasern ist das zusätzliche Aufbringen eines Haftvermittlers nicht mehr erforderlich.

Das Material für die erste nicht-leitfähige Faser ist bevorzugt ausgewählt aus der Gruppe bestehend aus Polyester (PES) und / oder Polyphenylensulfid (PPS) und / oder Polyoxadiazol (POD) und / oder Aramid (AR) und / oder Polyamid (PA) und / oder Polyvinylalkohol (PVA) und / oder Polyimid (PI) und / oder Polyetheretherketon (PEEK) und / oder Polyethylen-2,6-naphthalat (PEN) und / oder Polyphenylen (PPP) und / oder Polyphenylenoxid (PPO) und / oder Polyphenylenether (PPE) und / oder Polybenzoxazol (PBO) und / oder Glasfasern (GF) und / oder Baumwolle (CO) und / oder Gesteinsfasern, wie bspw. Basaltfasern, und / oder Cellulose und / oder Modal und / oder Keramikfasern. Die genannten Fasern können alleine oder in einer Kombination aus wenigstens zwei Fasern verwendet werden, was bedeutet, dass für die erste elektrisch nicht-leitfähige Faser auch eine Materialkombination eingesetzt werden kann.
Bevorzugt können PA, PES, PPS, AR und / oder PVA als Material für die erste nicht-leitfähige Faser alleine oder in Kombination aus wenigstens zwei Fasern verwendet werden.

Das Material für die zweite leitfähige Faser ist bevorzugt ausgewählt aus der Gruppe bestehend aus Kohlenstofffasern (CF) und / oder Metallfasern (MF), wie bspw. Kupferfasern oder Stahlfasern. Die genannten Fasern können alleine oder in Kombination aus wenigstens zwei Fasern verwendet werden, was bedeutet, dass für die zweite elektrisch leitfähige Faser ebenso eine Materialkombination eingesetzt werden kann.

Durch ein geeignetes Mengenverhältnis zwischen elektrisch leitfähigen und elektrisch nicht-leitfähigen Fasern kann die elektrische Leitfähigkeit individuell für den Anwendungsfall eingestellt werden.

Bevorzugt ist es, wenn die Menge an elektrisch leitfähigen Fasern maximal 50% beträgt. Mengen über 50% können zu einem erhöhten Verschleiß in den Verarbeitungsmaschinen führen
Durch eine geeignete Materialwauswahl kann ebenso Gewicht eingespart werden.

Die elektrisch leitfähigen Schläuche können neben wenigstens einer eingebetteten Festigkeitsträgerlage mehrere Lagen oder Schichten aus unterschiedlichen Elastomeren, thermoplastischen Elastomeren oder Thermoplasten enthalten. Grundsätzlich können alle Elastomere, thermoplastische Elastomere (TPE) oder Thermoplaste (TP) oder Thermoplastischen Vulkanisaten (TPV) eingesetzt werden. Die Elastomere sind beispielsweise ausgewählt aus der Gruppe, bestehend aus:
Nitrilkautschuk (NBR) und / oder (teil)hydrierter Nitril-Kautschuk (HNBR) und / oder Fluor-Kautschuk (FKM) und / oder Chloropren-Kautschuk (CR) und / oder chloriertes Polyethylen (CM) und / oder chlorsulfoniertes Polyethylen (CSM) und / oder Polyepichlorhydrin (ECO) und / oder Ethylen-Vinylacetat-Kautschuk (EVA) und / oder Acrylat-Kautschuk (ACM) und / oder Ethylen-Acrylat-Kautschuk (AEM) und / oder Silikonkautschuk (MQ, VMQ, PVMQ, FVMQ) und / oder Fluorierter Methylsilikonkautschuk (MFQ) und / oder Perfluorinierter Propylen-Kautschuk (FFPM) und / oder Perfluorcarbon-Kautschuk (FFKM) und / oder Ethylen-Propylen-DienKautschuk (EPDM).
Zur weiteren Verbesserung der elektrischen Leitfähigkeit werden besonders bevorzugt von sich aus leitfähige Elastomere wie bspw. FKM verwendet.
Die genannten Elastomere können alleine oder im Verschnitt mit wenigstens zwei Elastomeren im Verschnitt eingesetzt werden.
Ebenso ist es möglich, die Elastomere im Verschnitt mit Thermoplastischen Elastomeren und / oder Thermoplasten zu verwenden.
Wird ein thermoplastisches Vulkanisat verwendet, so haben sich aufgrund der guten elektrischen Leitfähigkeit F-TPV als besonders bevorzugt gezeigt.

Ein derartiger Schlauch findet vorzugsweise Anwendung im Kraftstoffbereich für Automobile, aber auch für Betankungs- und Zapfschläuche.

Die Erfindung wird nun anhand eines Ausführungsbeispiels unter Bezugnahme auf Versuchsergebnisse und schematische Zeichnungen erläutert.

### Versuchsergebnisse

Bei gleichem Schlauchaufbau zeigt ein Schlauch mit einem eingebetteten Festigkeitsträger aus zwei elektrisch nicht-leitfähigen Fasern eine elektrische Leitfähigkeit von 30 kOhm/m , während ein erfindungsgemäßer Schlauch mit einem eingebetteten Festigkeitsträger aus einer elektrisch leitfähigen Faser und einer nicht-elektrisch leitfähigen Faser eine elektrische Leitfähigkeit von 6 kOhm/m aufweist.

Tabelle 1 zeigt die Verbesserung der Querstabilität, während Tabelle 2 die Verbesserung der Knickbeständigkeit und Medienbeständigkeit aufzeigt.

**Tabelle 1**

| | Erfindungsgemäß | Kohlenstoffaden |
|---|---|---|
| Schlingenfestigkeit [N] | 27,2 | 2,0 |
| Knotenfestigkeit [N] | 23,5 | 1,0 |

**Tabelle 2**

| | Erfindungsgemäß | Cu-Litze | Kohlenstofffaden |
|---|---|---|---|
| Säurebeständigkeit | ++ | -- | ++ |
| Laugenbeständigkeit | ++ | -- | ++ |
| Beständigkeit gegen AdBlue® | ++ | -- | ++ |
| Beständigkeit gegen mechanische Beschädigung | + | O | -- |

### Schematische Zeichnungen

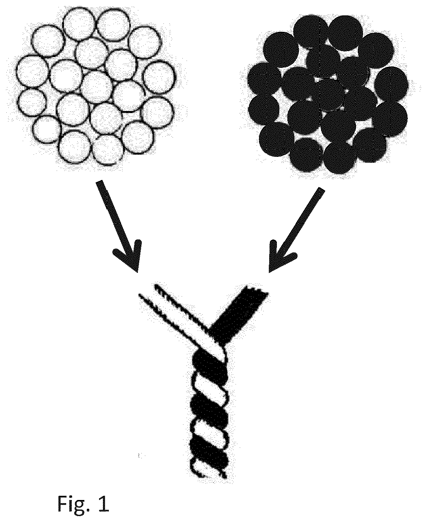

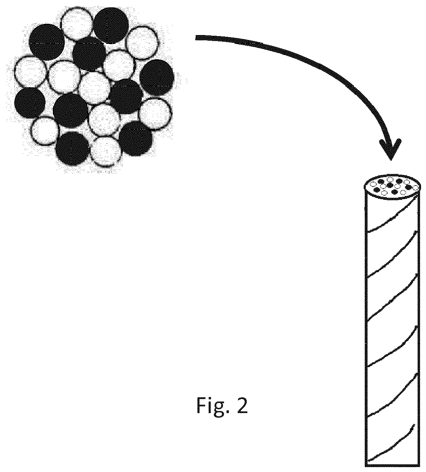

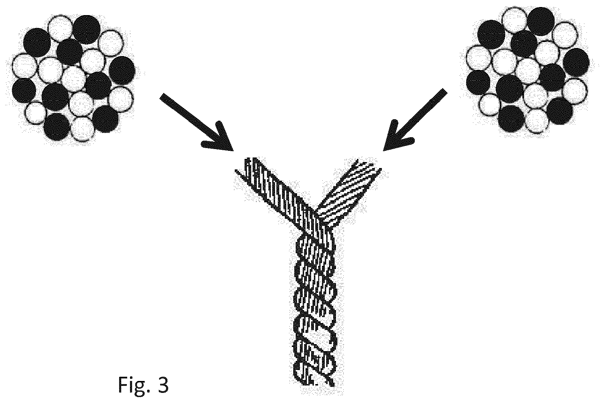

Die Figuren 1 bis 3 zeigen jeweils unterschiedliche Garnaufbauten. Die schematisch in Weiß dargestellten Fasern bestehen hierbei aus dem ersten elektrisch nicht-leitfähigen Material während die schematisch in Schwarz dargestellten Fasern aus dem zweiten elektrisch leitfähigen Material bestehen.
- Fig. 1: zeigt einen Hybridzwirn aus dem Stand der Technik, bestehend aus zwei verschiedenen Garnen, die jeweils vollständig aus einem anderen Material aufgebaut sind.
- Fig. 2: zeigt ein elektrisch leitfähiges Mischfasergarn, welches aus wenigstens zwei Fasern besteht, die verschiedenartig voneinander sind und wobei eine erste Faser (weiß) elektrisch nicht-leitfähig ist und eine zweite Faser (schwarz) elektrisch leitfähig ist.
- Fig. 3: zeigt einen elektrisch leitfähigen Mischfaserzwirn, bei dem zwei Mischfasergarne gemäß Erfindung zu einem elektrisch leitfähigen Zwirn verdreht sind.

## Patentansprüche

1. Mehrschichtiger elektrisch leitfähiger flexibler Schlauch enthaltend wenigstens eine eingebettete Festigkeitsträgerlage, **dadurch gekennzeichnet, dass** wenigstens ein eingebetteter Festigkeitsträger wenigstens ein Garn aus einem Faserstoff enthält, welches aus wenigstens zwei Fasern besteht, die verschiedenartig voneinander sind und wobei eine erste Faser elektrisch nicht-leitfähig ist und eine zweite Faser elektrisch leitfähig ist.

2. Mehrschichtiger elektrisch leitfähiger flexibler Schlauch nach Anspruch 1, **dadurch gekennzeichnet, dass** die eingebettete Festigkeitsträgerlage wenigstens einen Zwirn enthält, der wenigstens ein Garn aus einem Faserstoff enthält, welches aus wenigstens zwei Fasern besteht, die verschiedenartig voneinander sind und wobei eine erste Faser elektrisch nicht-leitfähig ist und eine zweite Faser elektrisch leitfähig ist.

3. Mehrschichtiger elektrisch leitfähiger flexibler Schlauch nach Anspruch 1 oder 2, **dadurch gekennzeichnet, dass** die erste elektrisch nicht-leitfähige Faser des Garns aus Polyester (PES) und / oder Polyphenylensulfid (PPS) und / oder Polyoxadiazol (POD) und / oder Aramid (AR) und / oder Polyamid (PA) und / oder Polyvinylalkohol (PVA) und / oder Polyimid (PI) und / oder Polyetheretherketon (PEEK) und / oder Polyethylen-2,6-naphthalat (PEN) und / oder Polyphenylen (PPP) und / oder Polyphenylenoxid (PPO) und / oder Polyphenylenether (PPE) und / oder Polybenzoxazol (PBO) und / oder Glasfasern (GF) und / oder Baumwolle (CO) und / oder Gesteinsfasern und / oder Cellulose und / oder Modal und / oder Keramikfasern aufgebaut ist.

4. Mehrschichtiger elektrisch leitfähiger flexibler Schlauch einem der Ansprüche 1 bis 3, **dadurch gekennzeichnet, dass** die zweite elektrisch leitfähige Faser des Garns aus Carbonfasern und / oder Metallfasern aufgebaut ist.

5. Verwendung eines mehrschichtigen elektrisch leitfähigen flexiblen Schlauchs nach einem der Ansprüche 1 bis 4 als Kraftstoffschlauch, Betankungsschlauch oder Zapfschlauch.
